# FASCICULE DE BREVET EUROPEEN

(11) **EP 4 034 797 B1**
(45) Date de publication et mention de la délivrance du brevet: **28.06.2023**
(21) Numéro de dépôt: 20785810.1
(22) Date de dépôt: 16.09.2020
(51) Int. Cl.: F16N 27/00, F16N 29/02, F16H 57/04, F16H 57/08, F01D 25/18, F02C 7/06, F02C 7/36

(54) **RESTRICTEUR D'HUILE POUR LA LUBRIFICATION DE SECOURS D'UN ÉLÉMENT DE TURBOMACHINE D'AÉRONEF**
ÖLDROSSEL ZUR NOTSCHMIERUNG EINES BAUTEILS FÜR EIN FLUGZEUGTRIEBWERK
OIL RESTRICTOR FOR EMERGENCY LUBRICATION OF A COMPONENT FOR AN AIRCRAFT TURBINE ENGINE

(30) Priorité: 24.09.2019 FR 1910548
(43) Date de publication de la demande: 03.08.2022
(73) Titulaire: Safran Transmission Systems, 92700 Colombes (FR)
(72) Inventeur: DOMBEK, Alexis Claude Michel, 77550 Moissy-Cramayel (FR); GEDIN, Patrice Jocelyn Francis, 77550 Moissy-Cramayel (FR)
(74) Mandataire: Gevers & Orès
(86) Numéro de dépôt international: PCT/FR2020/051595
(87) Numéro de publication internationale: WO 2021/058893

(56) Documents cités:
- EP-A1- 3 159 578
- FR-A1- 3 071 293
- JP-B2- 3 217 622
- US-A- 2 632 996
- US-A1- 2015 252 945

## Description

### Domaine technique de l'invention

La présente invention concerne un restricteur d'huile pour la lubrification de secours d'un élément de turbomachine d'aéronef.

### Arrière-plan technique

L'état de l'art comprend notamment les documents FR-A1-2 995 055, FR-A1-3 047 284, FR-A1-3 066 792, US-A1-2015/252945, FR-A1-3 071 293, US-A1-2,632,996, EP-A1-3 159 578, JP-B2-3 217 622 et WO-A1-2014/037659.

Un restricteur de fluide ou un dispositif de restriction de fluide est un dispositif qui est utilisé pour réduire le passage d'un fluide. Un restricteur autorise le passage de fluide mais de façon limitée ou maîtrisée. Dans le cas d'une turbomachine d'aéronef, un restricteur est logé dans un alésage d'une pièce afin de maîtriser la quantité de fluide passant dans cet alésage par exemple. Un restricteur d'huile peut par exemple être utilisé pour la lubrification de secours d'un réducteur mécanique de turbomachine.

Le rôle d'un réducteur mécanique est de modifier le rapport de vitesse et de couple entre l'axe d'entrée et l'axe de sortie d'un système mécanique.

Les nouvelles générations de turbomachines à double flux, notamment celles ayant un haut taux de dilution, comportent un réducteur mécanique pour entraîner l'arbre d'une soufflante (aussi appelé « fan »). De manière usuelle, le réducteur a pour but de transformer la vitesse de rotation dite rapide de l'arbre d'une turbine de puissance en une vitesse de rotation plus lente pour l'arbre entraînant la soufflante.

Un tel réducteur comprend un pignon central, appelé solaire, une couronne et des pignons appelés satellites, qui sont en prise entre le solaire et la couronne. Les satellites sont maintenus par un châssis appelé porte-satellites. Le solaire, la couronne et le porte-satellites sont des planétaires car leurs axes de révolution coïncident avec l'axe longitudinal X de la turbomachine. Les satellites ont chacun un axe de révolution différents équirépartis sur le même diamètre de fonctionnement autour de l'axe des planétaires. Ces axes sont parallèles à l'axe longitudinal X.

Il existe plusieurs architectures de réducteur. Dans l'état de l'art des turbomachines à double flux, les réducteurs sont de type planétaire ou épicycloïdal. Il existe dans d'autres applications similaires, des architectures dites différentielles ou « compound ».
- sur un réducteur planétaire, le porte-satellites est fixe et la couronne constitue l'arbre de sortie du dispositif qui tourne dans le sens inverse du solaire.
- sur un réducteur épicycloïdal, la couronne est fixe et le porte-satellites constitue l'arbre de sortie du dispositif qui tourne dans le même sens que le solaire.
- sur un réducteur différentiel, aucun élément n'est fixé en rotation. La couronne tourne dans le sens contraire du solaire et du porte-satellites. Les réducteurs peuvent être composés d'un ou plusieurs étages d'engrènement. Cet engrènement est assuré de différentes façons comme par contact, par friction ou encore par champs magnétique. Il existe plusieurs types d'engrènement par contact comme avec des dentures droites ou en chevron.

Les satellites peuvent être guidés en rotation par des paliers lisses qui comprennent chacun un corps tubulaire dont la cavité interne est alimentée en huile de lubrification. L'huile alimente la cavité interne et est acheminée jusqu'à une surface externe de guidage par des orifices de passage d'huile. En fonctionnement, les paliers lisses doivent être lubrifiés en continu et une interruption de l'alimentation en huile des paliers est problématique. Une solution à ce problème a été trouvée en équipant les paliers lisses avec des restricteurs d'huile. En plus des orifices de passage d'huile, chaque palier lisse comprend au moins un alésage dans lequel est logé et fretté un restricteur d'huile. En cas d'interruption de l'alimentation en huile d'un palier lisse, le restricteur permet de limiter le passage d'huile depuis la cavité jusqu'à la surface de guidage, afin d'acheminer une plus petite quantité d'huile jusqu'à cette surface mais pendant une durée plus importante (de l'ordre de 15 à 30 secondes par exemple). En effet, en l'absence d'un tel restricteur, l'huile ne serait pas acheminée jusqu'à la surface ou traverserait trop rapidement l'alésage, ce qui ferait que le palier lisse ne serait plus du tout lubrifié après un bref instant (quelques secondes) après la rupture de l'alimentation en huile.

Pour assurer le passage à travers le restricteur, celui-ci comprend un circuit intégré de passage d'huile.

Le document WO-A1-2014/037659 de la demanderesse décrit un exemple de réalisation d'un tel restricteur. Bien que particulièrement efficace, ce restricteur comprend un corps cylindrique métallique formé de plusieurs pastilles superposées qui doivent être indexées les unes par rapport aux autres et appliquées les unes contre les autres à l'intérieur de l'alésage. Les pastilles comprennent différentes parties du circuit d'huile, qui sont mises en communication fluidique lors de l'empilement et de l'indexage des pastilles. La fabrication de ces pastilles est complexe et les performances finales du restricteur sont fortement dépendantes de la qualité et des tolérances de fabrication. Le montage des pastilles dans l'alésage est complexe et a nécessité le développement d'un outillage dédié sans assurance sur la réalisation d'un bon montage. En particulier, si lors du montage les différentes pastilles ne sont pas en contact les unes avec les autres, le restricteur ne fonctionne pas correctement. De plus, le risque que les pastilles soient éjectées en fonctionnement du fait de la faible longueur de frettage est important.

La présente invention propose une solution à au moins une partie de ces problèmes, qui est simple, efficace et économique.

### Résumé de l'invention

L'invention concerne un restricteur d'huile pour la lubrification de secours d'un élément de turbomachine d'aéronef, ce restricteur comportant un corps cylindrique, par exemple métallique, qui s'étend selon un axe longitudinal et configuré pour être logé et fixé par frettage dans un alésage cylindrique d'une pièce de la turbomachine, ce restricteur comportant un circuit intégré d'huile pour le passage d'huile à travers le restricteur, le long de son étendue axiale, caractérisé en ce que ledit corps est monobloc, et en ce que ledit circuit intégré d'huile comprend au moins deux canaux d'huile formés en creux sur une surface cylindrique externe du corps et s'étendant autour et/ou le long dudit axe.

L'invention permet de simplifier la fabrication et le montage d'un restricteur de fluide pour une turbomachine. Elle permet également de supprimer les risques de pertes de performances au montage, et de réduire le risque d'éjection et de colmatage du restricteur en fonctionnement. Pour la simplification du montage, un des enjeux est de supprimer l'orientation angulaire qui existe aujourd'hui entre les différentes pastilles pour assurer la communication fluidique des différentes parties du circuit d'huile formées dans les pastilles. La solution technique proposée consiste à supprimer l'empilement de pastilles, et réaliser l'ensemble du corps en une seule pièce. La pièce unique définit le circuit d'huile à sa périphérie, avec l'alésage de la pièce.

Le restricteur selon l'invention peut comprendre une ou plusieurs des caractéristiques suivantes, prises isolément les unes des autres, ou en combinaison les unes avec les autres :
- le restricteur comprend au moins deux, voire trois, canaux d'huile s'étendant en hélice sur la surface externe du corps,
- le corps comprend des première et seconde extrémités longitudinales opposées chacune pourvue d'une face d'extrémité longitudinale radiale vis-à-vis de l'axe longitudinal,
- chacun des canaux en hélice comprend une première extrémité de canal débouchant à la première extrémité longitudinale du corps, et une seconde extrémité de canal opposée en communication fluidique avec un conduit du corps, ce conduit ayant une orientation sensiblement radiale par rapport audit axe longitudinal et s'étendant entre cette seconde extrémité de canal et un trou borgne formé au centre de la face radiale de la seconde extrémité longitudinale du corps,
- le restricteur comprend une pluralité de conduits qui sont chacun reliés à un canal en hélice respectif,
- les conduits sont régulièrement répartis autour dudit axe,
- les conduits débouchent dans le trou borgne dans un premier plan qui est perpendiculaire audit axe longitudinal, ce premier plan étant situé à une première distance de ladite face radiale de la seconde extrémité longitudinale du corps, la première distance étant inférieure à une seconde distance entre la face radiale de la seconde extrémité longitudinale du corps et un second plan perpendiculaire audit axe longitudinal et passant par un fond du trou borgne, et qui représente par exemple entre 30 et 80% de cette seconde distance,
- le restricteur comprend une première rangée annulaire d'au moins deux, de préférence au moins quatre canaux rectilignes parallèles entre eux et audit axe longitudinal, régulièrement répartis autour de cet axe longitudinal,
- le restricteur comprend au moins une deuxième rangée annulaire d'au moins deux, de préférence au moins quatre, canaux rectilignes parallèles entre eux et audit axe longitudinal, régulièrement répartis autour de cet axe, les canaux de la première rangée étant décalés circonférentiellement autour de l'axe longitudinal vis-à-vis des canaux de la deuxième rangée ou d'une autre rangée, et les canaux de la première rangée étant séparés des canaux de la deuxième rangée ou d'une autre rangée par une gorge annulaire formée sur la surface externe du corps et s'étendant autour dudit axe longitudinal,
- la ou chaque gorge annulaire a une profondeur supérieure à une profondeur desdits canaux de chaque rangée,
- le restricteur comprend
   -- le circuit d'huile présente des variations brusques telles que des coudes, des variations de section, des séparations et réunions de section, etc.,
   -- le circuit d'huile est configuré pour générer des pertes de charge lors de l'écoulement d'huile dans ce circuit,
   -- le circuit d'huile comprend au moins un piège à particules,
   -- le trou borgne ou la gorge annulaire forme un piège à particules,
   -- le trou borgne est configuré pour coopérer avec un outil de montage et/ou de démontage du restricteur,
   -- ledit corps a une longueur ou étendue axiale supérieure à son diamètre,
   -- le corps comprend une face radiale d'extrémité comprenant un trou borgne sensiblement en son centre,
   -- le corps comprend à chacune de ses extrémités axiales une face radiale comportant un trou borgne sensiblement en son centre,
   -- les trous borgnes ont des dimensions et des fonctions différentes,
   -- le restricteur est symétrique pour s'affranchir du sens de montage, et
- le restricteur comprend des canaux longitudinaux rectilignes et parallèles entre eux, qui s'étendent sur une partie seulement de la longueur dudit corps, et des canaux circonférentiels de liaison des canaux longitudinaux entre eux, un premier et un deuxième canal longitudinal débouchant à une extrémité axiale opposée du corps pour permettre le passage d'huile à travers le restricteur le long de son étendue axiale.

La présente invention concerne également un réducteur mécanique de turbomachine, en particulier d'aéronef, comportant un solaire, une couronne s'étendant autour du solaire, et des satellites engrenés avec le solaire et la couronne, lesdites satellites étant guidés par des paliers d'un porte-satellites, chacun de ces paliers comportant une cavité interne alimentée en huile et une surface cylindrique externe de guidage, chacun de ces paliers comportant en outre des orifices de passage d'huile s'étendant depuis ladite cavité jusqu'à ladite surface externe, ainsi qu'au moins un alésage s'étendant depuis ladite cavité jusqu'à ladite surface externe et dans lequel est logé et fixé par frettage un restricteur tel que décrit ci-dessus. L'invention concerne en outre une turbomachine, en particulier d'aéronef, comportant un restricteur ou un réducteur tel que décrit ci-dessus.

### Brève description des figures

D'autres caractéristiques et avantages ressortiront de la description qui suit d'un mode de réalisation non limitatif de l'invention en référence aux dessins annexés sur lesquels :
[Fig. 1] la figure 1 est une vue schématique en coupe axiale d'une turbomachine utilisant l'invention,
[Fig. 2] la figure 2 est une vue schématique partielle en coupe axiale d'un réducteur mécanique,
[Fig. 3] la figure 3 est une vue schématique en perspective et coupe axiale d'un palier lisse et d'un satellite d'un réducteur mécanique,
[Fig. 4] la figure 4 est une vue schématique en coupe partielle et à plus grande échelle d'un palier lisse équipé d'un restricteur selon un mode de réalisation de l'invention,
[Fig. 5] la figure 5 est une vue schématique en perspective et à plus grande échelle du restricteur de la figure 4,
[Fig. 6] la figure 6 est une vue schématique à encore plus grande échelle d'un détail de la figure 4,
[Fig. 7] la figure 7 est une vue schématique à encore plus grande échelle d'un autre détail de la figure 4,
[Fig. 8] la figure 8 est une vue schématique en perspective d'un restricteur selon une variante de réalisation de l'invention,
[Fig. 9] la figure 9 est une autre vue schématique en perspective du restricteur de la figure 8, et
[Fig. 10] la figure 10 est une vue schématique en perspective d'un restricteur selon une autre variante de réalisation de l'invention.

### Description détaillée de l'invention

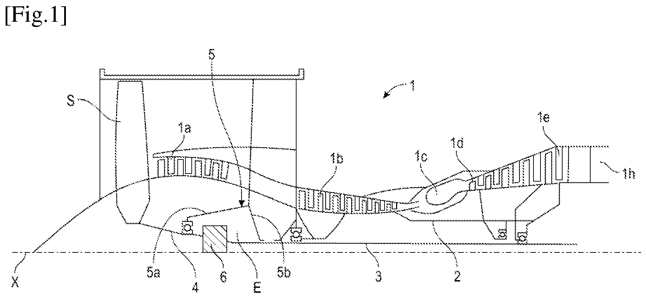

La figure 1 décrit une turbomachine 1 qui comporte, de manière classique, une soufflante S, un compresseur basse pression 1a, un compresseur haute pression 1b, une chambre annulaire de combustion 1c, une turbine haute pression 1d, une turbine basse pression 1e et une tuyère d'échappement 1h. Le compresseur haute pression 1b et la turbine haute pression 1d sont reliés par un arbre haute pression 2 et forment avec lui un corps haute pression (HP). Le compresseur basse pression 1a et la turbine basse pression 1e sont reliés par un arbre basse pression 3 et forment avec lui un corps basse pression (BP).

La soufflante S est entraînée par un arbre de soufflante 4 qui est entrainé à l'arbre BP 3 au moyen d'un réducteur 6. Ce réducteur 6 est généralement de type planétaire ou épicycloïdal.

Bien que la description qui suit concerne un réducteur du type planétaire ou épicycloïdal, elle s'applique également à un différentiel mécanique dans lequel les trois composants, que sont le porte-satellites, la couronne et le solaire, sont mobiles en rotation, la vitesse de rotation de l'un de ces composants dépendant notamment de la différence de vitesses des deux autres composants.

Le réducteur 6 est positionné dans la partie amont de la turbomachine. Une structure fixe comportant schématiquement, ici, une partie amont 5a et une partie aval 5b qui compose le carter moteur ou stator 5 est agencée de manière à former une enceinte E entourant le réducteur 6. Cette enceinte E est ici fermée en amont par des joints au niveau d'un palier permettant la traversée de l'arbre de soufflante 4, et en aval par des joints au niveau de la traversée de l'arbre BP 3.

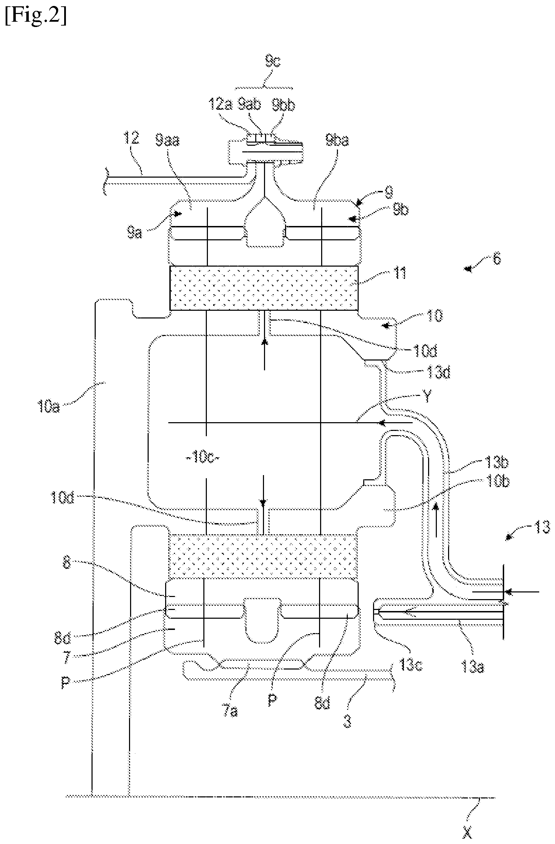

La figure 2 montre un réducteur 6 qui peut prendre la forme de différentes architectures selon si certaines pièces sont fixes ou en rotation. En entrée, le réducteur 6 est relié à l'arbre BP 3, par exemple par l'intermédiaire de cannelures internes 7a. Ainsi l'arbre BP 3 entraîne un pignon planétaire appelé le solaire 7. Classiquement, le solaire 7, dont l'axe de rotation est confondu avec celui de la turbomachine X, entraîne une série de pignons appelés satellites 8, qui sont équirépartis sur le même diamètre autour de l'axe de rotation X. Ce diamètre est égal au double de l'entraxe de fonctionnement entre le solaire 7 et les satellites 8. Le nombre de satellites 8 est généralement défini entre trois et sept pour ce type d'application.

L'ensemble des satellites 8 est maintenus par un châssis appelé porte-satellites 10. Chaque satellite 8 tourne autour de son propre axe Y, et engrène avec la couronne 9.

En sortie nous avons :
▪ dans une configuration épicycloïdale, l'ensemble des satellites 8 entraine en rotation le porte-satellite 10 autour de l'axe X de la turbomachine. La couronne est fixée au carter moteur ou stator 5 via un porte-couronne 12 et le porte-satellites 10 est fixé à l'arbre de soufflante 4.
▪ dans une configuration planétaire, l'ensemble des satellites 8 est maintenu par un porte-satellites 10 qui est fixé au carter moteur ou stator 5. Chaque satellite entraine la couronne qui est rapportée à l'arbre de soufflante 4 via un porte-couronne 12.

Chaque satellite 8 est monté libre en rotation à l'aide d'un palier 11, par exemple de type roulement ou palier lisse hydrodynamique. Dans le cas d'un palier lisse, le palier 11 comprend un corps tubulaire 10b et les corps tubulaires des différents paliers lisses sont positionnés les uns par rapport aux autres et sont portés par un châssis structurel 10a du porte-satellites 10. Il existe un nombre de paliers 11 égal au nombre de satellites 8. Pour des raisons de fonctionnement, de montage, de fabrication, de contrôle, de réparation ou de rechange, les paliers 11 (et en particulier les corps tubulaires 10b) et le châssis 10a peuvent être séparés en plusieurs pièces. Pour les mêmes raisons citées précédemment, la denture 8d d'un réducteur peut être séparée en plusieurs hélices présentant chacun un plan médian P. Dans notre exemple, nous détaillons le fonctionnement d'un réducteur à plusieurs hélices avec une couronne séparée en deux demi-couronnes:
▪ une demi-couronne amont 9a constituée d'une jante 9aa et d'une demi-bride de fixation 9ab. Sur la jante 9aa se trouve l'hélice amont de la denture du réducteur. Cette hélice amont engrène avec celle du satellite 8 qui engrène avec celle du solaire 7.
▪ une demi-couronne aval 9b constituée d'une jante 9ba et d'une demi-bride de fixation 9bb. Sur la jante 9ba se trouve l'hélice aval de la denture du réducteur. Cette hélice aval engrène avec celle du satellite 8 qui engrène avec celle du solaire 7.

Si les largeurs d'hélice varient entre le solaire 7, les satellites 8 et la couronne 9 à cause des recouvrements de denture, elles sont toutes centrées sur un plan médian P pour les hélices amont et sur un autre plan médian P pour les hélices aval.

La demi-bride de fixation 9ab de la couronne amont 9a et la demi-bride de fixation 9bb de la couronne aval 9b forment la bride de fixation 9c de la couronne. La couronne 9 est fixée à un porte-couronne en assemblant la bride de fixation 9c de la couronne et la bride de fixation 12a du porte-couronne à l'aide d'un montage boulonné par exemple.

Les flèches de la figure 2 décrivent l'acheminement de l'huile dans le réducteur 6. L'huile arrive dans le réducteur 6 depuis la partie stator 5 dans le distributeur 13 par différents moyens qui ne seront pas précisés dans cette vue car ils sont spécifiques à un ou plusieurs types d'architecture. Le distributeur est séparé en deux parties en général chacune répétée du même nombre de satellites. Les injecteurs 13a ont pour fonction de lubrifier les dentures et les bras 13b ont pour fonction de lubrifier les paliers 11. L'huile est amenée vers des injecteurs 13a pour ressortir par des extrémités 13c afin de lubrifier par de l'huile les dentures des satellites 8, du solaire 7 et aussi de la couronne 9. L'huile est également amenée vers le bras 13b et circule via la bouche d'alimentation 13d du corps 10b dans une cavité interne 10c de ce dernier. L'huile circule ensuite dans cette cavité 10c pour alimenter des orifices 10d de passage d'huile jusqu'à une surface cylindrique externe de guidage du satellite correspondant.

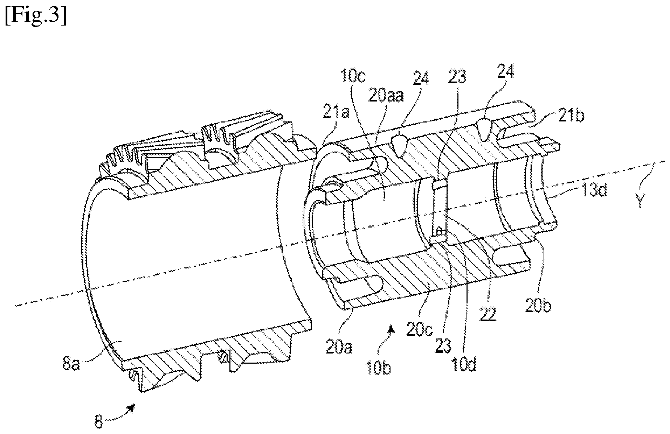

La figure 3 montre un exemple plus concret de réalisation d'un palier lisse et de son corps tubulaire 10b pour un satellite 8 de réducteur.

Le corps tubulaire 10b comprend deux parois annulaires 20a, 20b coaxiales qui s'étendent l'une autour de l'autre et qui sont reliées entre elles par une âme annulaire 20c.

La paroi annulaire interne 20b a au moins une extrémité axiale ouverte définissant la bouche d'alimentation 13d précitée, pour recevoir de l'huile apportée par le distributeur (non représenté). La paroi interne 20b définit ainsi la cavité 10c de réception de l'huile de lubrification.

La paroi annulaire externe 20a a une longueur ou dimension axiale mesurée le long de l'axe Y, qui est proche de celle de la paroi 20b. La paroi 20a comprend une surface cylindrique externe 20aa qui est configurée pour délimiter avec une surface cylindrique interne 8a du palier 8 un espace annulaire de réception d'huile et de formation d'un film d'huile en vue de la formation du palier hydrodynamique.

L'âme 20c a une longueur plus petite mesurée de la même façon, si bien que les extrémités axiales des parois 20a, 20b délimitent entre elles des rainures annulaires 21a, 21b. Cette configuration permet de conférer une certaine souplesse au corps 10b, au niveau de chacune de ses extrémités axiales. Le corps 10b comprend en outre une cloison transversale 22 située dans la cavité 10c, sensiblement en son milieu par rapport à l'étendue de la cavité le long de l'axe Y. Cette cloison 22 est reliée à sa périphérie à la surface interne de la paroi 20a et comprend des conduits 23 de mise en communication fluidique des deux portions de la cavité 10c entre lesquelles s'étend la cloison 22.

Le corps 10b comprend des orifices 10d de passage d'huile de lubrification depuis la cavité 10c jusqu'à la périphérie externe du support 10b, et en particulier jusqu'à la surface 20aa. Dans l'exemple représenté, ces orifices 10d sont formés au milieu du corps 10b, par rapport à l'étendue du corps le long de l'axe Y, et s'étendent depuis les conduits 23 jusqu'à la surface 20aa en traversant la cloison 23, la paroi interne 20b, l'âme 20c et enfin la paroi externe 20a.

La cavité 10c est alimentée en huile en continu en fonctionnement. Cette huile pénètre dans la cavité 10c puis dans les conduits 23 et est acheminée par les orifices 10d jusqu'à la surface 20aa. Les forces centrifuges appliquées au porte-satellites et aux corps 10b en fonctionnement suffisent à assurer cette circulation d'huile.

En cas de coupure d'alimentation en huile, les conduits 23 et les orifices 10d ne sont plus alimentés en huile et une faible quantité d'huile reste plaquée sur la surface interne de la paroi 20a de chaque corps 10b car le porte-satellites continue de tourner. Dans ce cas particulier, pour continuer de lubrifier le satellite 8 pendant une certaine durée (par exemple 15 à 30 secondes), il est connu de prévoir des alésages 24 dans le corps 10b, qui s'étendent entre la cavité 10c et la surface 20aa et dans lesquels sont logés et frettés des restricteurs d'huile.

Un restricteur d'huile permet de réduire et de maîtriser la quantité d'huile qui passe dans un alésage, par exemple en augmentant la distance parcourue par ce fluide et/ou en augmentant les pertes de charge lors de la circulation de ce fluide.

La présente invention propose un perfectionnement aux restricteurs de la technique actuelle.

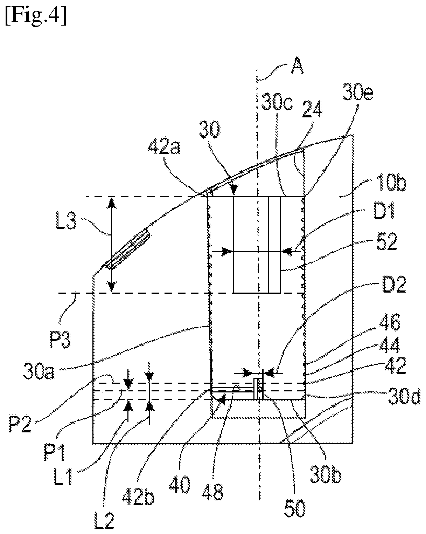

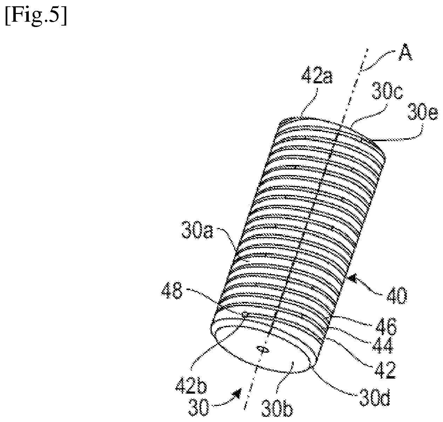

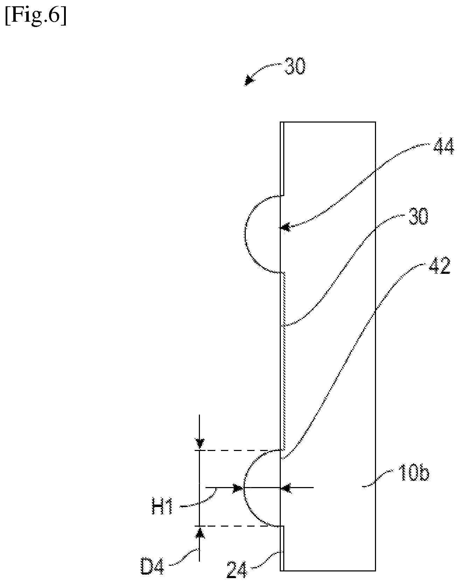

Un premier mode de réalisation est illustré aux figures 4 à 7.

Le restricteur 30 se présente sous la forme d'un corps cylindrique métallique monobloc dont l'axe longitudinal est noté A. Le restricteur 30 est configuré pour être logé et fixé par frettage dans l'alésage 24 du corps 10b ou toute autre pièce de turbomachine.

Le restricteur 30 comprend une surface cylindrique externe 30a et deux faces planes et transversales ou radiales 30b, 30c à ses extrémités axiales. Les bords annulaires périphériques 30d, 30e situés aux extrémités axiales du corps, aux interfaces entre les surfaces 30a, 30b, 30c peuvent être chanfreinés ou non comme c'est le cas du bord 30d situé au niveau de la face 30b.

Le restricteur 30 comporte un circuit intégré 40 d'huile pour le passage d'huile à travers le restricteur, le long de son étendue axiale. Dans l'exemple représenté, ce circuit 40 comprend au moins deux canaux d'huile, et par exemple trois canaux d'huile 42, 44, 46, formés en creux sur la surface 30a et s'étendant autour et/ou le long de l'axe A.

Les canaux 42-46 s'étendent ici en hélice sur la surface externe 30a. Ils s'étendent les uns à côté des autres en étant séparés les uns des autres d'un pas constant, mesuré le long de l'axe A.

Chacun des canaux 42-46 comprend une première extrémité longitudinale 42a débouchant sur la face 30c, et une seconde extrémité longitudinale 42b opposée en communication fluidique avec un conduit 48 du corps. Chaque conduit 48 est situé au voisinage de la face 30b et a une orientation sensiblement radiale par rapport à l'axe A. Chaque conduit 48 s'étend entre l'extrémité 42b et un trou borgne 50 formé au centre de la face 30b.

Les conduits 48 sont régulièrement répartis autour de l'axe A. Ils débouchent dans le trou borgne 50 dans un premier plan P1 qui est perpendiculaire à l'axe A. Ce plan P1 est situé à une première distance L1 de la face 30b qui est inférieure à une seconde distance L2 entre cette face 30b et un second plan P2 perpendiculaire à l'axe A et passant par le fond du trou borgne 50. L1 représente par exemple entre 30 et 80% de L2.

La face 30c comprend un autre trou borgne 52 en son centre.

Le diamètre D1 du trou borgne 52 est ici nettement supérieur à celui D2 du trou borgne 52. Par ailleurs, la distance L2, correspondant à la profondeur du trou 50, est nettement inférieure à la profondeur du trou 52, qui correspond à la distance L3 entre la face 30c et un troisième plan P3 perpendiculaire à l'axe A et passant par le fond du trou borgne 52. L3 peut représenter entre 30 et 70% de l'étendue axiale du restricteur 30.

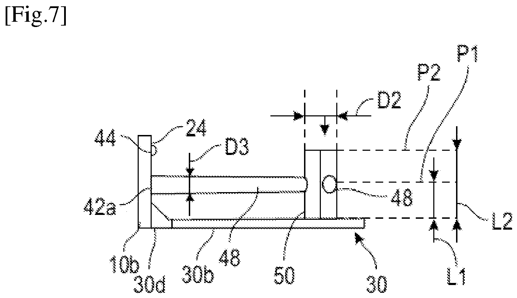

On voit également que le trou 50 a un diamètre D1 supérieur au diamètre D3 des conduits 48 et à la profondeur H1 des canaux 42-46. Cette profondeur H1 est par exemple sensiblement égale ou inférieure à la moitié du diamètre D4 des canaux 42-46 (figure 7).

Les trous 50, 52 ont donc des dimensions différentes et ont ici des fonctions différentes. Le trou 50 a ici une fonction de piège à particules, comme cela sera décrit plus en détail dans ce qui suit. Le trou 52 a une fonction de montage/démontage puisqu'il est configuré pour coopérer avec un outil particulier pour faciliter le montage et le démontage du restricteur, et en particulier sa pose par frettage dans l'alésage.

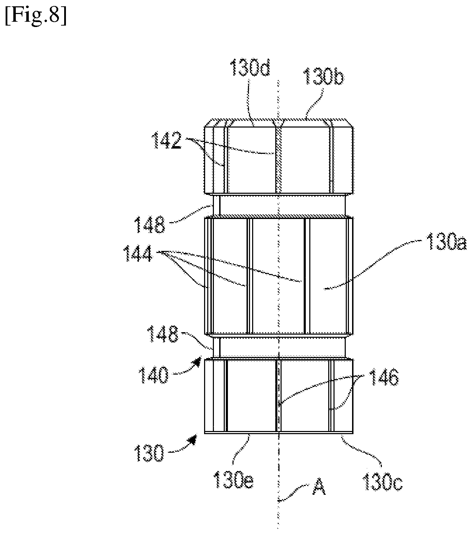

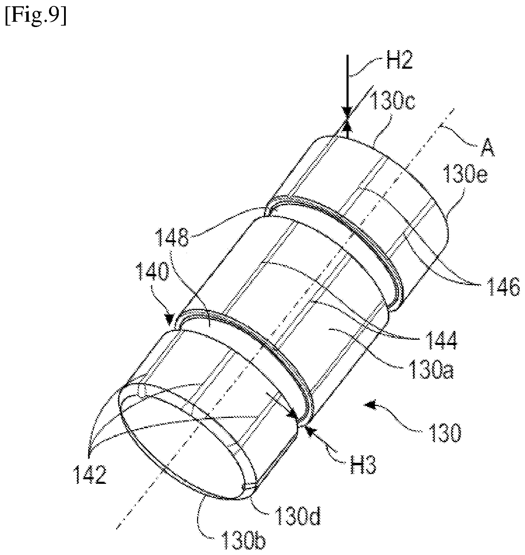

En fonctionnement, de l'huile parvient par effet centrifuge dans l'alésage 24 jusqu'à la face 30b. Cette huile pénètre dans le trou 50 et les éventuelles particules polluantes qu'elle contiendrait sont piégées en restant au fond du trou 50, du fait de l'écart entre les plans P1 et P2 précités. L'huile circule alors par les conduits 48 jusqu'aux canaux 42-46 puis s'écoulent dans ces canaux 42-46 autour du corps et à l'intérieur de l'alésage 24. Ces canaux 42-46 ralentissent l'huile et créent des pertes de charge. L'huile parvient ensuite au niveau de la face 30c pour alimenter la surface 20aa du palier de satellite. Les figures 8 et 9 illustrent une variante de réalisation d'un restricteur 130 selon l'invention.

Le restricteur 130 se présente sous la forme d'un corps cylindrique métallique monobloc dont l'axe longitudinal est noté A. Le restricteur 130 est configuré pour être logé et fixé par frettage dans l'alésage 24 du corps 10b ou toute autre pièce de turbomachine.

Le restricteur 130 comprend une surface cylindrique externe 130a et deux faces planes et transversales ou radiales 130b, 130c à ses extrémités axiales. Les bords annulaires périphériques 130d, 130e situés aux extrémités axiales du corps, aux interfaces entre les surfaces 130a, 130b, 130c peuvent être chanfreinés ou non comme c'est le cas du bord 130d situé au niveau de la face 130b.

Le restricteur 130 comporte un circuit intégré 140 d'huile pour le passage d'huile à travers le restricteur, le long de son étendue axiale. Dans l'exemple représenté, ce circuit 140 comprend des rangées annulaires d'au moins quatre canaux 142, 144, 146 rectilignes et parallèles entre eux et à l'axe A, régulièrement répartis autour de cet axe.

Dans l'exemple représenté, le nombre de rangées est de trois, les rangées de canaux étant séparées les unes des autres par des gorges annulaires 148 formées sur la surface 130a et s'étendant autour de l'axe A. Les gorges 148 sont ici au nombre de deux.

Les canaux 142 de la première rangée sont situés sur un premier tronçon axial du corps qui s'étend axialement depuis la face 130b jusqu'à une des deux gorges 148. Les canaux 144 de la seconde rangée sont situés sur un tronçon axial intermédiaire du corps qui s'étend axialement entre les deux gorges 148. Les canaux 146 de la dernière rangée sont situés sur un troisième tronçon axial du corps qui s'étend axialement depuis la face 130c jusqu'à une des deux gorges 148.

Le nombre de canaux 142-146 est identique pour les différentes rangées, et est de huit dans l'exemple représenté. Les dessins permettent de voir que les gorges annulaires 148 ont une profondeur H2 identique entre elles et qui est supérieure à la profondeur H3 des canaux 142-146. Les canaux 142-146 ont ici des profondeurs H3 identiques. Ils permettent également de voir que, bien que les canaux 142, 146 soient alignées deux à deux le long de l'axe A, ce n'est pas le cas des canaux 144 qui sont décalés angulairement par rapport aux canaux 142, 146.

En fonctionnement, de l'huile parvient par effet centrifuge dans l'alésage 24 jusqu'à la face 130b. Cette huile pénètre dans les canaux 142 et circule jusqu'à la première gorge 148 qui forme un premier piège à particules du fait de la différence de profondeurs avec les canaux 142-146. L'huile s'écoule ensuite par les canaux 144 jusqu'à la seconde gorge 148 qui forme un autre piège à particules pour la même raison. L'huile s'écoule ensuite par les canaux 146 jusqu'à la face 130c du restricteur, à l'intérieur de l'alésage 24. Les canaux 142-146 et les gorges 148 ralentissent l'huile et créent des pertes de charge du fait du défaut d'alignement entre les canaux 142-146. L'huile parvient ensuite sur la surface 20aa du palier de satellite.

Dans l'état de la technique, les pertes de charges dans le restricteur étaient générées par des changements de section et des changements de direction du fluide, ce qui nécessitait de concevoir et fabriquer des géométries complexes. Dans les modes de réalisation proposées, les pertes de charge sont générées de manière continue uniquement via les canaux 42-26, 142-146 du circuit intégré au restricteur, ce qui simplifie fortement la conception et la fabrication. Il suffit donc de dimensionner les canaux (longueur et diamètre notamment) pour obtenir les pertes de charge souhaitées.

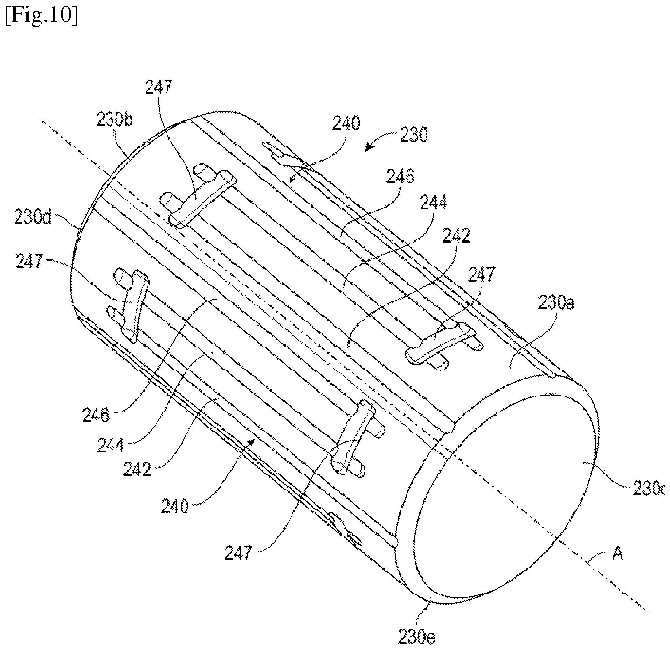

La figure 10 illustre une variante de réalisation d'un restricteur 230 selon l'invention.

Le restricteur 230 se présente sous la forme d'un corps cylindrique métallique monobloc dont l'axe longitudinal est noté A. Le restricteur 230 est configuré pour être logé et fixé par frettage dans l'alésage 24 du corps 10b ou toute autre pièce de turbomachine.

Le restricteur 230 comprend une surface cylindrique externe 230a et deux faces planes et transversales ou radiales 230b, 230c à ses extrémités axiales. Les bords annulaires périphériques 230d, 230e situés aux extrémités axiales du corps, aux interfaces entre les surfaces 230a, 230b, 230c peuvent être chanfreinés.

Le restricteur 230 comporte un circuit intégré 240 d'huile pour le passage d'huile à travers le restricteur, le long de son étendue axiale. Dans l'exemple représenté, ce circuit 240 comprend d'une part des canaux longitudinaux 242, 244, 246 rectilignes et parallèles entre eux et à l'axe A, et régulièrement répartis autour de cet axe.

Le circuit 240 comprend d'autre part des canaux circonférentiels 247 de liaison des canaux 242, 244, 246 entre eux.

Les canaux 242, 244, 246 s'étendent sur une partie seulement de la longueur du corps mesurée le long de l'axe. Les canaux 242 ont chacun une extrémité longitudinale qui débouche sur la face 230c, et une extrémité longitudinale opposée qui est reliée par un canal 247 a une première extrémité d'un canal 244. Ce canal 244 s'étend entre le canal 242 auquel il est relié et un canal 246 auquel il est également relié. La seconde extrémité opposée du canal 247 est reliée par un autre canal 247 à une extrémité longitudinale du canal 246 dont l'extrémité longitudinale opposée débouche sur la face 230b.

De l'huile peut ainsi circuler d'une face à l'autre du corps, par l'intermédiaire d'une pluralité de jeux de canaux 242, 244, 246, 247. Les jeux de canaux, par exemple au nombre de 6 ou 7 sont régulièrement répartis autour de l'axe A.

Comme dans l'exemple représenté, les extrémités longitudinales des canaux 242, 244, 246 reliées aux canaux 247 peuvent être prolongées le long de l'axe A pour former des extrémités borgnes formant des pièges à particules. Le risque de pertes d'étanchéité entre les différentes pastilles lors du montage du restricteur de la technique antérieure est supprimé en réalisant l'étanchéité des canalisations dans le frettage avec le palier. Le montage n'a plus de risque de réduire l'étanchéité.

Pour réduire les risques d'obturation et de colmatage en cas de pollution d'huile, le circuit est séparé en plusieurs canaux indépendants alimentés de manière distincte, ce qui permet en cas d'obturation d'un des canaux (voir de son conduit d'alimentation 48) d'assurer le passage d'huile dans les autres canaux (ou conduits). Le circuit comprend également au moins un piège à particules. Via le champ centrifuge, les particules se concentrent en partie haute du trou 50 ou au fond des gorges 148, et ne bouchent pas les canaux.

Les gains apportés par l'invention sont notamment:
- rapidité et modularité de conception de ce type de restricteur,
- réduction du cout et du temps de fabrication du restricteur,
- simplification et rapidité des opérations de montage du restricteur,
- réduction des risques au montage et en fabrication du restricteur, et
- réduction des risques en fonctionnement.

L'invention trouve une application particulière mais non limitative pour un réducteur mécanique et vise à faciliter l'écoulement d'huile qui s'opère en fonctionnement pour évacuer l'huile vers les paliers des satellites, à travers les restricteurs.

## Revendications

1. Restricteur d'huile (30, 130, 230) pour la lubrification de secours d'un élément de turbomachine d'aéronef, ce restricteur comportant un corps cylindrique qui s'étend selon un axe longitudinal (A) et configuré pour être logé et fixé par frettage dans un alésage cylindrique (24) d'une pièce (10b) de la turbomachine, ce restricteur comportant un circuit intégré d'huile (40, 140, 240) pour le passage d'huile à travers le restricteur, le long de son étendue axiale, **caractérisé en ce que** ledit corps est monobloc, et **en ce que** ledit circuit intégré d'huile (40, 140, 240) comprend au moins deux canaux d'huile (42-46, 142-146, 242-246) formés en creux sur une surface cylindrique externe (30a, 130a, 230a) du corps et s'étendant autour et/ou le long dudit axe.

2. Restricteur (30) selon la revendication 1, dans lequel il comprend au moins deux, voire trois, canaux d'huile (42-46) s'étendant en hélice sur la surface externe (30a) du corps.

3. Restricteur (30) selon la revendication 2, dans lequel le corps comprend des première et seconde extrémités longitudinales opposées chacune pourvue d'une face d'extrémité longitudinale (30b) radiale vis-à-vis de l'axe longitudinal (A), chacun des canaux (42-46) en hélice comprend une première extrémité de canal (42a) débouchant à la première extrémité longitudinale du corps, et une seconde extrémité de canal (42b) opposée en communication fluidique avec un conduit (48) du corps, ce conduit (48) ayant une orientation sensiblement radiale par rapport audit axe longitudinal (A) et s'étendant entre cette seconde extrémité de canal et un trou borgne (50) formé au centre de la face radiale (30b) de la seconde extrémité longitudinale du corps.

4. Restricteur (30) selon la revendication 3, comprenant une pluralité de conduit (48) chacun reliés à un canal (42-46) en hélice respectif, les conduits (48) étant régulièrement répartis autour dudit axe (A).

5. Restricteur (30) selon la revendication 3 ou 4, dans lequel les conduits (48) débouchent dans le trou borgne (50) dans un premier plan (P1) qui est perpendiculaire audit axe longitudinal (A), ce premier plan (P1) étant situé à une première distance (L1) de ladite face radiale (30b) de la seconde extrémité longitudinale du corps, la première distance (L1) étant inférieure à une seconde distance (L2) entre la face radiale (30b) de la seconde extrémité longitudinale du corps et un second plan (P2) perpendiculaire audit axe longitudinal (A) et passant par un fond du trou borgne (50), et qui représente par exemple entre 30 et 80% de cette seconde distance (L2).

6. Restricteur (130) selon la revendication 1, dans lequel il comprend une première rangée annulaire d'au moins deux, de préférence au moins quatre, canaux rectilignes (142-146) parallèles entre eux et audit axe longitudinal (A), régulièrement répartis autour de cet axe longitudinal (A).

7. Restricteur (130) selon la revendication 6, dans lequel il comprend au moins une deuxième rangée annulaire d'au moins deux, de préférence au moins quatre canaux rectilignes (142-146) parallèles entre eux et audit axe longitudinal (A), régulièrement répartis autour de cet axe, les canaux (144) de la première rangée étant décalés circonférentiellement autour de l'axe longitudinal (A) vis-à-vis des canaux (142, 146) de la deuxième rangée ou d'une autre rangée, et les canaux (144) de la première rangée étant séparés des canaux de la deuxième ou d'une autre rangée par une gorge annulaire (148) formée sur la surface externe du corps et s'étendant autour dudit axe longitudinal (A).

8. Restricteur (130) selon la revendication 7, dans lequel la ou chaque gorge annulaire (148) a une profondeur (H3) supérieure à une profondeur (H2) desdits canaux (142-146) de chaque rangée.

9. Restricteur (230) selon la revendication 1, dans lequel il comprend des canaux longitudinaux (242, 244, 246) rectilignes et parallèles entre eux, qui s'étendent sur une partie seulement de la longueur dudit corps, et des canaux circonférentiels (247) de liaison des canaux longitudinaux (242, 244, 246) entre eux, un premier et un deuxième canal longitudinal (242, 244, 246) débouchant à une extrémité axiale opposée du corps pour permettre le passage d'huile à travers le restricteur le long de son étendue axiale.

10. Réducteur mécanique (6) de turbomachine, en particulier d'aéronef, comportant un solaire (7), une couronne (9) s'étendant autour du solaire (7), et des satellites (8) engrenés avec le solaire (7) et la couronne (9), lesdits satellites (8) étant guidés par des paliers (11) lisses d'un porte-satellites, chacun de ces paliers (11) comportant une cavité (10c) interne alimentée en huile et une surface cylindrique externe (20aa) de guidage, chacun de ces paliers comportant en outre des orifices (10d) de passage d'huile s'étendant depuis ladite cavité (10c) jusqu'à ladite surface externe, ainsi qu'au moins un alésage (20aa) s'étendant depuis ladite cavité (10c) jusqu'à ladite surface externe et dans lequel est logé et fixé par frettage un restricteur (30, 130) selon l'une des revendications précédentes.

11. Turbomachine (1), en particulier d'aéronef, comportant au moins un restricteur (30, 130) selon l'une des revendications 1 à 9 ou un réducteur mécanique (6) selon la revendication précédente.

## Patentansprüche

1. Öldrossel (30, 130, 230) zur Notschmierung eines Bauteils einer Turbomaschine eines Luftfahrzeugs, wobei diese Drossel einen zylindrischen Körper umfasst, der sich entlang einer Längsachse (A) erstreckt und dazu ausgelegt ist, in einer zylindrischen Bohrung (24) eines Teils (10b) der Turbomaschine aufgenommen zu werden und durch Aufschrumpfung daran befestigt zu werden, wobei diese Drossel einen integrierten Ölkreislauf (40, 140, 240) für den Öldurchgang durch die Drossel hindurch längs ihrer axialen Erstreckung umfasst, **dadurch gekennzeichnet, dass** der Körper einteilig ist und dass der integrierte Ölkreislauf (40, 140, 240) mindestens zwei Ölkanäle (42-46, 142-146, 242-246) umfasst, die vertieft auf einer zylindrischen Außenfläche (30a, 130a, 230a) des Körpers gebildet sind und sich um und/oder längs der Achse erstrecken.

2. Drossel (30) nach Anspruch 1, wobei sie mindestens zwei, sogar drei, Ölkanäle (42-46) umfasst, die sich spiralförmig auf der Außenfläche (30a) des Körpers erstrecken.

3. Drossel (30) nach Anspruch 2, wobei der Körper ein erstes und ein zweites Längsende umfasst, die entgegengesetzt sind und jeweils mit einer gegenüber der Längsachse (A) radialen Längsendseite (30b) versehen sind, wobei jeder der spiralförmigen Kanäle (42-46) ein erstes Kanalende (42a), das in das erste Längsende des Körpers mündet, und ein zweites Kanalende (42b) umfasst, das gegenüberliegt und in strömungstechnischer Kommunikation mit einer Leitung (48) des Körpers steht, wobei diese Leitung (48) in Bezug auf die Längsachse (A) eine im Wesentlichen radiale Ausrichtung aufweist und sich zwischen diesem zweiten Kanalende und einem in der Mitte der radialen Seite (30b) des zweiten Längsendes des Körpers gebildeten Sackloch (50) erstreckt.

4. Drossel (30) nach Anspruch 3, umfassend eine Vielzahl von Leitungen (48), die jeweils mit einem entsprechenden spiralförmigen Kanal (42-46) verbunden sind, wobei die Leitungen (48) regelmäßig um die Achse (A) verteilt sind.

5. Drossel (30) nach Anspruch 3 oder 4, wobei die Leitungen (48) in das Sackloch (50) in einer ersten Ebene (P1) münden, die senkrecht zur Längsachse (A) ist, wobei diese erste Ebene (P1) in einem ersten Abstand (L1) zur radialen Seite (30b) des zweiten Längsendes des Körpers gelegen ist, wobei der erste Abstand (L1) kleiner ist als ein zweiter Abstand (L2) zwischen der radialen Seite (30b) des zweiten Längsendes des Körpers und einer zweiten Ebene (P2) senkrecht zur Längsachse (A) und durch einen Boden des Sacklochs (50) verlaufend, und der zum Beispiel zwischen 30 und 80% dieses zweiten Abstands (L2) darstellt.

6. Drossel (130) nach Anspruch 1, wobei sie eine erste ringförmige Reihe von mindestens zwei, vorzugsweise mindestens vier, geradlinigen Kanälen (142-146) umfasst, die zueinander und zur Längsachse (A) parallel sind und regelmäßig um diese Längsachse (A) verteilt sind.

7. Drossel (130) nach Anspruch 6, wobei sie mindestens eine zweite ringförmige Reihe von mindestens zwei, vorzugsweise mindestens vier, geradlinigen Kanälen (142-146) umfasst, die zueinander und zur Längsachse (A) parallel sind und regelmäßig um diese Achse verteilt sind, wobei die Kanäle (144) der ersten Reihe gegenüber den Kanälen (142, 146) der zweiten Reihe oder einer anderen Reihe umlaufend um die Längsachse (A) versetzt sind, und wobei die Kanäle (144) der ersten Reihe von den Kanälen der zweiten oder einer anderen Reihe durch eine ringförmige Nut (148) getrennt sind, die auf der Außenfläche des Körpers gebildet ist und sich um die Längsachse (A) erstreckt.

8. Drossel (130) nach Anspruch 7, wobei die oder jede ringförmige Nut (148) eine Tiefe (H3) aufweist, die größer ist als eine Tiefe (H2) der Kanäle (142-146) jeder Reihe.

9. Drossel (230) nach Anspruch 1, wobei sie Längskanäle (242, 244, 246), die geradlinig und parallel zueinander sind und sich nur über einen Teil der Länge des Körpers erstrecken, und umlaufende Kanäle (247) zur Verbindung der Längskanäle (242, 244, 246) untereinander umfasst, wobei ein erster und ein zweiter Längskanal (242, 244, 246) in ein entgegengesetztes axiales Ende des Körpers mündet, um den Öldurchgang durch die Drossel hindurch längs ihrer axialen Erstreckung zu ermöglichen.

10. Mechanisches Untersetzungsgetriebe (6) einerTurbomaschine, insbesondere eines Luftfahrzeugs, umfassend ein Sonnenrad (7), eine Krone (9), die sich um das Sonnenrad (7) erstreckt, und Planeten (8), die mit dem Sonnenrad (7) und der Krone (9) in Eingriff stehen, wobei die Planeten (8) durch Gleitlager (11) eines Planetenträgers geführt werden, wobei jedes dieser Lager (11) einen inneren Hohlraum (10c), der mit Öl versorgt wird, und eine zylindrische äußere Führungsfläche (20aa) umfasst, wobei jedes dieser Lager weiter Öldurchgangsöffnungen (10d), die sich ausgehend von dem Hohlraum (10c) bis zur Außenfläche erstrecken, sowie mindestens eine Bohrung (20aa) umfasst, die sich ausgehend von dem Hohlraum (10c) bis zur Außenfläche erstreckt und in der eine Drossel (30, 130) nach einem der vorstehenden Ansprüche aufgenommen und durch Aufschrumpfung befestigt ist.

11. Turbomaschine (1), insbesondere eines Luftfahrzeugs, umfassend mindestens eine Drossel (30, 130) nach einem der Ansprüche 1 bis 9 oder ein mechanisches Untersetzungsgetriebe (6) nach dem vorstehenden Anspruch.

## Claims

1. An oil restrictor (30, 130, 230) for the emergency lubrication of a component for an aircraft turbine engine, this restrictor comprising a cylindrical body extending along a longitudinal axis (A) and configured to be housed and shrink-fitted in a cylindrical bore (24) of a part (10b) of the turbine engine, this restrictor comprising an integrated oil circuit (40, 140, 240) for the passage of oil through the restrictor along its axial extent, **characterised in that** said body is a one-piece body, and **in that** said integrated oil circuit (40, 140, 240) comprises at least two oil channels (42-46, 142-146, 242-246) recessed on an outer cylindrical surface (30a, 130a, 230a) of the body and extending around and/or along said axis.

2. The restrictor (30) according to claim 1, wherein it comprises at least two, and possibly three, oil channels (42-46) extending helically on the outer surface (30a) of the body.

3. The restrictor (30) according to claim 2, wherein the body comprises first and second opposite longitudinal ends each provided with a longitudinal end face (30b) radial to the longitudinal axis (A), each of the helical channels (42-46) comprises a first channel end (42a) opening at the first longitudinal end of the body and an opposite second channel end (42b) in fluid communication with a duct (48) of the body, this duct (48) having a substantially radial orientation with respect to said longitudinal axis (A) and extending between said second channel end and a blind hole (50) formed in the centre of the radial face (30b) of the second longitudinal end of the body.

4. The restrictor (30) according to claim 3, comprising a plurality of ducts (48) each connected to a respective helical channel (42-46), the ducts (48) being evenly distributed around said axis (A).

5. The restrictor (30) according to claim 3 or 4, wherein the ducts (48) open into the blind hole (50) in a first plane (P1) which is perpendicular to said longitudinal axis (A), this first plane (P1) being located at a first distance (L1) from said radial face (30b) of the second longitudinal end of the body, the first distance (L1) being less than a second distance (L2) between the radial face (30b) of the second longitudinal end of the body and a second plane (P2) perpendicular to said longitudinal axis (A) and passing through a bottom of the blind hole (50), and which represents for example between 30 and 80% of this second distance (L2).

6. The restrictor (130) according to claim 1, wherein it comprises a first annular row of at least two, preferably at least four, rectilinear channels (142-146) parallel to each other and to said longitudinal axis (A), regularly distributed around this longitudinal axis (A).

7. The restrictor (130) according to claim 6, wherein it comprises at least a second annular row of at least two, preferably at least four, rectilinear channels (142-146) parallel to each other and to said longitudinal axis (A), regularly distributed around this axis, the channels (144) of the first row being circumferentially offset around the longitudinal axis (A) with respect to the channels (142, 146) of the second or further row, and the channels (144) of the first row being separated from the channels of the second or further row by an annular groove (148) formed on the outer surface of the body and extending around said longitudinal axis (A).

8. The restrictor (130) of claim 7, wherein said or each annular groove (148) has a depth (H3) greater than a depth (H2) of said channels (142-146) of each row.

9. The restrictor (230) according to claim 1, wherein it comprises straight longitudinal channels (242, 244, 246) parallel to each other, which extend along only part of the length of said body, and circumferential channels (247) connecting the longitudinal channels (242, 244, 246) to each other, with a first and second longitudinal channel (242, 244, 246) opening at an opposite axial end of the body to allow oil to pass through the restrictor along its axial extent.

10. A mechanical reduction gear (6) for a turbine engine, in particular for an aircraft, comprising a sun gear (7), a ring gear (9) extending around the sun gear (7), and planet gears (8) meshed with the sun gear (7) and the ring gear (9), said planet gears (8) being guided by plain bearings (11) of a planet carrier, each of these bearings (11) comprising an internal cavity (10c) supplied with oil and an outer guiding cylindrical surface (20aa), each of these bearings further comprising oil passage orifices (10d) extending from said cavity (10c) to said outer surface, as well as at least one bore (20aa) extending from said cavity (10c) to said outer surface and in which is housed and shrink-fitted a restrictor (30, 130) according to one of the preceding claims.

11. A turbine engine (1), in particular for an aircraft, comprising at least one restrictor (30, 130) according to one of claims 1 to 9 or a mechanical reduction gear (6) according to the preceding claim.
